(19) Europäisches Patentamt
European Patent Office
Office européen des brevets

(11) **EP 3 050 609 A1**

(12) **EUROPEAN PATENT APPLICATION**
published in accordance with Art. 153(4) EPC

(43) Date of publication:
**03.08.2016 Bulletin 2016/31**

(21) Application number: **14847740.9**

(22) Date of filing: **26.09.2014**

(51) Int Cl.:
**B01D 35/22** (2006.01)    **B01D 61/18** (2006.01)
**B04B 1/00** (2006.01)    **B01D 29/33** (2006.01)
**C02F 9/02** (2006.01)

(86) International application number:
**PCT/ES2014/070735**

(87) International publication number:
**WO 2015/044497 (02.04.2015 Gazette 2015/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **26.09.2013 ES 201331401
25.09.2014 ES 201400757**

(71) Applicant: **Water Reuse Technologies, S.L.
48009 Bilbao (Vizcaya) (ES)**

(72) Inventors:
• **OTEGUI MARTÍNEZ, Pedro José
E-48009 Bilbao (Vizcaya) (ES)**
• **BARRANCA ÁLVAREZ, Beatriz
E-48009 Bilbao (Vizcaya) (ES)**

(74) Representative: **Ungria López, Javier
Avda. Ramón y Cajal, 78
28043 Madrid (ES)**

(54) **CLEANING SYSTEM IN FILTRATION PROCESSES AND CLEANING METHOD IN FILTRATION PROCESSES**

(57)    The invention relates to a cleaning system in filtration processes, comprising at least one feed pump (1), at least one hydropneumatic accumulator (2), at least one prefilter (3), at least one actuated three-way valve (4), at least one ultrafiltration module (14), at least one actuated product valve (5), at least one manual product valve (6), at least one scavenger valve (18), at least several actuated drainage valves (7, 20, 24), at least several needle valves (8, 21, 22), at least one compressor (9), at least one solenoid frame (10), at least several vent valves (11, 23), at least one feed tank (12), and at least one actuated recirculation valve (13). The feed pump (1) is connected in series with at least one prefilter (3) and at least one actuated three-way valve (4) at the inlet of a module (14). At least one hydropneumatic accumulator (2), and at least one actuated product valve (5) and a manual product valve (6) are connected in series with the outlet of the module (14).

FIG. 1

Description

## OBJECT OF THE INVENTION

The object of the present invention refers to a new cleaning system in filtration processes and cleaning method in filtration processes.

The invention includes a novel cleaning system that allows for producing a constant flow volume, thus increasing the net production of the system. Said system allows operating without needing the auxiliary elements required in conventional filtration equipment, such as a pump and a backwash tank.

## BACKGROUND OF THE INVENTION

Fluid cleaning systems using filtration processes that use hollow microfibre or fibre membranes, with an inside-out configuration, are well known in the state of the art. That is to say that the filtration occurs upon letting the flow volume run inside membrane fibres, said filtered flow volume exiting therefrom.

As the filtration process occurs, the solid particles are retained in the inside of the membrane fibres, reaching a point in which a cleaning is needed, due to the accumulation of particles.

Currently, the cleaning systems employed in filtration processes require the interruption of said filtration process to proceed with the cleaning, which results in a loss of water production, and consequently, of money. Even more, these current systems require the use of auxiliary equipment such as a pump or a backwash tank, or even a filtration unit as a back-up to maintain the production during the cleaning of the other unit.

## DESCRIPTION OF THE INVENTION

To achieve the goals of producing a constant flow volume and resolving the above-mentioned problems, the invention has developed a cleaning system in filtration processes, wherein the system comprises at least one feed pump, controlled by a variable frequency drive, at least one hydropneumatic accumulator, at least one prefilter, at least one actuated three-way valve, at least one ultrafiltration module, at least one actuated product valve, at least one manual product valve, at least one scavenger valve, at least needle valves, at least actuated drainage valves, at least one compressor, at least one solenoid frame, at least one vent valve, at least one feed tank, and at least one actuated recirculation valve.

The feed pump is connected with at least one prefilter and with at least one actuated three-way valve at the inlet of a module. The outlet of the module is connected in series with at least one hydropneumatic accumulator and at least one actuated product valve and at least one manual product valve, thus between the feed pump, which is oversized in terms of flow volume by certain percentage and the hydropneumatic accumulator, the flow volume required to perform the cleaning is provided.

In a scavenging stage of the cleaning system in filtration processes, the scavenger valve is connected with the outlet of at least one module and it is joined with a drainage line. In this drainage line, the vent valve, the actuated drainage valve and the needle valve are arranged in series, the last two valves being placed parallel to each other and in series with respect to the second actuated drainage valve. In a product line, the second vent valve is connected in series with the hydropneumatic accumulator. The compressor and the solenoid frame are connected in series with an inlet to the module.

In a backwash stage, the second needle valve is connected in series with the actuated three-way valve by means of one of the connection ways of said actuated three-way valve. In a product line, the actuated product valve and the third needle valve are connected parallel to each other, said valves being connected in series with the hydropneumatic accumulator at the outlet of the module.

In a rinsing stage, the scavenger valve, which is connected with the outlet of the module, is joined to a drainage line in series with the actuated drainage valve and the needle valve, these last two valves being placed parallel to each other, and in series with the second actuated drainage valve. Finally, in this stage, the actuated recirculation valve is connected parallel to the inlet of the second actuated drainage valve.

In an embodiment of the scavenging stage, the centrifugal separator is connected in series with the needle valve and both are connected parallel to the actuated drainage valve, and a third actuated drainage valve is connected in series with said centrifugal separator. In this embodiment of the invention, the actuated recirculation valve is connected parallel to the inlet of the second actuated drainage valve.

In an embodiment of the rinsing stage, the centrifugal separator is connected in series with the needle valve and both are connected parallel to the actuated drainage valve, and the third actuated drainage valve is connected in series with said centrifugal separator. In this embodiment of the invention, an actuated recirculation valve is connected parallel to the inlet of the second actuated drainage valve.

The elements making-up the cleaning system in filtration processes which are the object of the invention are controlled by a programmable logic controller "PLC", thus automatizing the entire process. The ultrafiltration module is preferably of the inside-out type, although the outside-in type is also used. Based on the size of the system, the compressor may be replaced by a blower.

The cleaning method in filtration processes that uses the system previously described comprises a first scavenging stage wherein the feed pump pumps fluid to at least one actuated three-way valve at the inlet of the module; at the outlet of the module at least one scavenger valve is opened, a needle valve is regulated to let the fluid pass maintaining an actuated drainage valve closed, said fluid abandoning the system through at least one second actuated drainage valve.

The procedure comprises a second backwash stage wherein the feed pump pumps fluid towards the inlet of the modules; and at the outlet of the modules, at least one actuated product valve is closed, maintaining the third needle valve opened, wherein at least one three-way valve closes the feed inlet to the washing module and opens the outlet towards the second needle valve, which is regulated to adjust the passage flow volume.

The procedure comprises a third rinsing stage, wherein the feed pump pumps fluid to at least one actuated three-way valve at the inlet of the module; and at the outlet of the module at least one scavenger valve (being the scavenger valves of the rest of the modules closed) and at least one actuated recirculation valve are opened and a needle valve is regulated to let the fluid pass, maintaining the actuated drainage valve closed, said fluid being recirculated to the feed current through the actuated recirculation valve.

In the first scavenging stage, it is possible to let air enter the system by means of a compressor from the solenoid frame, said air being eliminated through at least one vent valve.

In an embodiment of the invention, in the first scavenging stage, the fluid passes through the centrifugal separator, the centrifuged fluid is poured to the drainage line through the second actuated drainage valve, while the residues are discharged through the third actuated drainage valve. In another embodiment, the centrifuged fluid recirculates to a tank or to the feed current by means of an actuated recirculation valve.

In another embodiment of the invention, in the third rinsing stage, the fluid passes through the centrifugal separator, the centrifuged fluid is poured to the drainage line through the second actuated drainage valve, while the residues are discharged through the third actuated drainage valve. In another embodiment, the centrifuged fluid recirculates to a tank or to the feed current by means of an actuated recirculation valve.

In an embodiment of the invention, a CEF (chemically enhanced flushing) cleaning method is carried out, which consists in a scavenging or rinsing process as previously described, but adding chemical products to the feed current, such as an oxidizing agent, an acid, an alkali, etc. Each chemical product will have its dosing system composed of a chemical product tank and a metering pump and the necessary auxiliary elements. In a first embodiment of the CEF cleaning method, each of the chemical products is pumped to the feed current. In this embodiment, the chemical product tank and the metering pump are connected in series with the inlet of the actuated three-way valve, which is connected with the inlet of the module. In a second embodiment of the CEF cleaning method, the chemical products are injected to the drainage line.

In the first embodiment of the CEF cleaning, the method comprises a stage wherein a chemical solution is retained in at least one module, wherein the actuated three-way valve is closed at the feed inlet and the drainage outlet of at least one module, while the fluid circulates through the rest of the system. Afterwards, to eliminate the chemical solution of the module where it was retained, the scavenger valve, the feed of the actuated three-way valve and the second actuated drainage valve are opened.

In the second embodiment, the system comprises an actuated valve for CEF cleaning methods that joins the product line with the drainage line. In addition, the system comprises an acid injection valve, a base injection valve, and an oxidizing agent injection valve, wherein each valve is connected with a chemical product tank and a chemical product metering pump and wherein each valve controls the injection of one type of chemical product in the system's drainage line.

To perform the CEF cleaning method, according to the second embodiment of the system which is the object of the invention, the actuated recirculation valve is closed, one way of the actuated three-way valve of the module connecting with the second needle valve is opened, the second needle valve is opened, the scavenger valve of the module is opened, the valve for CEF is opened, at least one chemical product is injected to the drainage line by opening the related valve for chemical products, and finally, the water is eliminated with at least one chemical product, through the way of the actuated three-way valve that connects with the second needle valve and through the above-mentioned second needle valve.

To retain the water inside the module for some time prior to eliminating the water with at least one chemical product, the scavenger valve and the actuated three-way valve related to said module are closed, and the actuated product valve, the actuated recirculation valve, the second actuated drainage valves and the actuated valve for CEF cleaning methods are also closed.

In another embodiment of the invention, a CIP (cleaning in place) cleaning method is carried out, wherein a chemical solution may be retained in at least one module, or said chemical solution may be recirculated in the system.

In an embodiment of the invention of the CIP cleaning method with a chemical solution being continuously recirculated, for said recirculation the actuated recirculation valve, the scavenger valve and a manual washing by-pass valve are opened, and the manual product valve is closed, the pump thus continuing to feed the system.

In an embodiment of the invention of a CIP cleaning method wherein a chemical solution is retained in at least one module, the scavenger valve and the manual product valve are closed, thus interrupting the feed current to the pump when the cleaning solution is in the system.

As with the first embodiment of the invention of the CIP cleaning method, wherein a chemical solution is retained in at least one module, the scavenger valve is opened, and the manual product valve, the actuated recirculation valve and the second drainage valve are closed, the feed current to the pump being also interrupted when the cleaning solution is in the system.

The invention is characterised in that the order of the above-mentioned stages may be modified and in that they may be carried out simultaneously.

DESCRIPTION OF THE DRAWINGS

To complete the description and in order to give a better understanding of the characteristics of the invention, this descriptive report is accompanied by a series of drawings that are an integral part of the report, wherein, for illustration purposes and without limitation, the following has been represented:

Figure 1 is a diagram of the elements composing the filtration stage that belongs to the cleaning system in filtration processes, which is the object of the invention.

Figure 2.1 is a schematic view of the operating flow in the scavenging stage that belongs to the cleaning system in filtration processes. Figure 2.2 is a diagram of the elements composing said scavenging stage that belongs to the cleaning system in filtration processes, which is the object of the invention.

Figure 3.1 is a schematic view of the operating flow in the backwash stage that belongs to the cleaning system in filtration processes. Figure 3.2 is a diagram of the elements composing said backwash stage that belongs to the cleaning system in filtration processes, which is the object of the invention.

Figure 4.1 is a schematic view of the operating flow in the rinsing stage that belongs to the cleaning system in filtration processes. Figure 4.2 is a diagram of the elements composing said rinsing stage that belongs to the cleaning system in filtration processes, which is the object of the invention.

Figure 5.1 is a diagram of the elements composing an embodiment of the scavenging stage described in Figure 2.2 that belongs to the cleaning system in filtration processes, which are the object of the invention. Figure 5.2 is a diagram of the elements composing an embodiment of the rinsing stage described in Figure 4.2 that belongs to the cleaning system in filtration processes, which is the object of the invention.

Figure 6 is a diagram of the elements connected with the inlet of the cleaning system in filtration processes, which is the object of the invention, when CEF chemical cleaning methods are performed.

Figure 7 is a diagram of the elements connected with the cleaning system in filtration processes, which is the object of the invention, when the so-called CIP cleaning methods are performed.

Figure 8 is a diagram of the elements of the cleaning system in filtration processes, which is the object of the invention, employed in a second embodiment of the CEF cleaning method.

A list of the different components that have been represented in the drawings and that comprise the invention is detailed below:

| | |
|---|---|
| 1 | = feed pump, |
| 2 | = hydropneumatic accumulator, |
| 3 | = prefilter, |
| 4 | = actuated three-way valve, |
| 5 | = actuated product valve, |
| 6 | = manual product valve, |
| 7 | = actuated drainage valve, |
| 8 | = needle valve, |
| 9 | = compressor, |
| 10 | = solenoid frame, |
| 11 | = vent valve, |
| 12 | = feed tank, |
| 13 | = actuated recirculation valve, |
| 14 | = module, |
| 15 | = membrane, |

| | |
|---|---|
| 16 | = flow, |
| 17 | = solid particles, |
| 18 | = scavenger valve, |
| 19 | = centrifugal separator, |
| 20 | = second actuated drainage valve, |
| 21 | = second needle valve, |
| 22 | = third needle valve, |
| 23 | = second vent valve, |
| 24 | = third actuated drainage valve, |
| 25 | = drainage line, |
| 26 | = product line, |
| 27a, 27b, 27c | = chemical product tanks, |
| 28a, 28b, 28c | = chemical product metering pumps, |
| 29 | = manual washing by-pass valve, |
| 30 | = acid injection valve, |
| 31 | = base injection valve, |
| 32 | = oxidizing agent injection valve, |
| 33 | = actuated valve for CEF cleaning methods. |

## DETAILED DESCRIPTION OF THE INVENTION

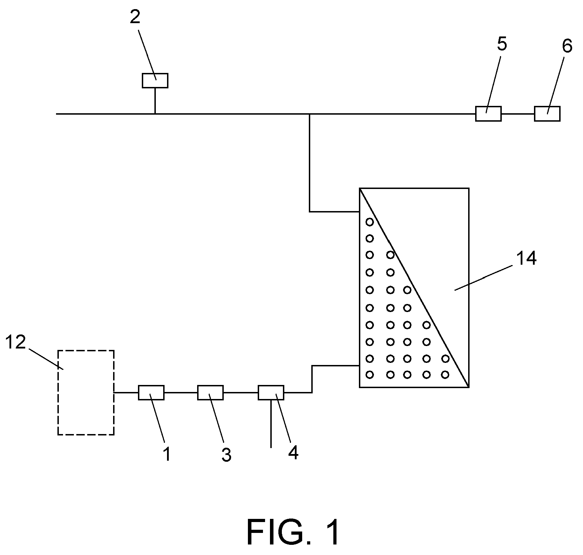

In view of what was previously mentioned and referring to the numbering adopted in the figures, Figures 1 to 8 represent the preferred embodiments of the cleaning system in filtration processes.

Afterwards, the operation of the cleaning system in filtration processes is described in greater detail. For said purposes, it is necessary to define the variables of the process beforehand, to perform each type of cleaning and obtain the maximum performance during the filtration process. The operating parameters, which should be controlled to carry out the filtration process and to perform each type of cleaning, are: flow volumes, pressures and time.

These parameters are determined based on the following variables, which are previously defined based on the facility:

- F: Operating flow (16) ($l/m^2/h$).
- A: Area of the membrane (15) / module (14) ($m^2$).
- X: No. of modules (14).
- Y: No. of modules (14) washing at the same time.

In a filtration process, hollow fibre membrane (15) modules (14) operating with the inside-out configuration are preferably used, but modules (14) operating with the outside-in configuration are also used. The membranes (15) described in the invention are composed of hollow fibres or else of hollow microfibres, referring to both types of fibres interchangeably when the term "fibres" is mentioned in the present description of the invention. During said filtration stage, a feed pump (1) pumps fluid to the product flow volume (Qp), which will depend on the operating flow (16) (F), on the membrane area (15) (A) and the number of modules (14) (X), which will have been previously defined based on the feed fluid. The product flow volume is measured based on the following expression: $Qp = F \cdot X \cdot A$.

As it can be observed in Figure 1, the fluid is pumped towards a prefilter (3), which retains particles larger than a certain size, as preventive measure prior to the filtration in the modules (14). Afterwards, an actuated three-way valve (4), which comprises three connection ways that direct the flow (16) of the fluid, has the inlet connection to the modules (14) open. The fluid passes through the membrane (15) module (14) from bottom to top, also passing through said membranes (15) from the inside to the outside, obtaining the product fluid through one side in the upper part of the module (14).

An actuated product valve (5) and a manual product valve (6), which block or allow the outlet of the product, are located in series at the outlet of the module (14), and are open, allowing the product to be sent to its destination. As the filtration occurs, the modules (14) become clogged, the particles larger than the size of the membrane fibre (15) pore being retained therein. Therefore, after a certain time, tp (filtration time), it will be necessary to start with the cleaning methods, which are the object of the invention.

Based on the type of fluid, both the operating flows (F) and the filtration time (tp) vary. Ideally, the following values have been proposed for surface waters, sea waters and residual waters: surface water (F = 120 lmh, tp= 90 min), sea water (F = 70 lmh, tp= 60 min), residual water (F = 40 lmh, tp= 40 min). However, since the parameters to be controlled for each type of fluid differ significantly, the following filtration ranges are set: $40 \leq F \ (lmh) \leq 120$ ; $20 \leq t_p \ (min) \leq 120$.

In filtration processes, the particle retention of the membranes (15) depends on various factors, such as the quality of the feed fluid, the type of membrane (15) used in the process, the operating conditions, etc. Thus, different kinds of cleaning methods are proposed based on the dirt layer existing in the membrane (15) fibres.

Trans-membrane pressure (TMP), which is defined as the average inlet flow (16) pressure minus permeate pressure, gradually increases over time due to the accumulation of solid particles (17) in the membrane (15) fibres. Due to said accumulation, it is necessary to carry out different cleaning methods or a combination thereof based on the kind of dirt of the membrane (15) fibres.

Solid particles (17) may be absorbed in the inner surface of the fibres or partially adsorbed in their pores, such that an optimum cleaning sequence has been established to discharge the solid particles (17) from the inner surface or from the pores of the membrane (15) fibres: scavenger (sc), backwash (bw) and rinsing (ri).

It is worth noting that depending on the quality of the feed fluid, the previously mentioned cleaning methods may not be sufficient and every so often and they may be supplemented with chemical cleaning methods to re-establish the properties of the membrane (15). The chemical cleaning methods used are: CEF (chemically enhanced flushing), and CIP (cleaning in place).

To determine the number of modules (14) washing at the same time (Y), the number of modules (X) need to be taken into account:

If X<8 - ▶ Y=1.
If X≥8 - ▶ we have two options:

$$\text{If } \left[ \frac{X}{2} \cdot \left( t_{sc} + t_{bw} + t_{ri} + t_{HA} + t_{o/c} \right) \right] < t_p \rightarrow Y=2;$$

$$\text{If } \left[ \frac{X}{2} \cdot \left( t_{sc} + t_{bw} + t_{ri} + t_{HA} + t_{o/c} \right) \right] > t_p \rightarrow Y=4.$$

Being $t_{o/c}$ = time of opening and closing of valves and $t_{HA}$ = time to fill the hydropneumatic accumulator (2) to complete a cleaning cycle.

The scavenging is the first of the optimum cleaning sequence proposed. It is mainly used to drag the solid particles (17) deposited in the inner surface of the membrane (15). The cleaning is carried out module (14) by module (14) (or by pairs of modules (14), depending on the size of the facility), while the rest of the modules (14) continues filtering. It consists in making the feed fluid pass tangentially through the inner side of the membrane (15) fibres. The greater the feed flow volume is the greater the turbulence is created, thus resulting in greater dragging and making the scavenging more effective. To optimize the performance of the scavenging process, air may be introduced in the feed current of each of the modules (14), in which case, several vent valves (11, 23) will discharge the surplus air, either through a product line (26) or through a drainage line (25). The additional flow volume required to maintain the product flow volume constant will be provided by the hydropneumatic accumulator (2) and by the feed pump (1). Said feed pump (1) is capable of increasing or reducing the flow volume by modifying its frequency. During the scavenging stage, the feed pump (1) is working at a maximum frequency of 50 Hz, reached when it provides the maximum flow volume ($Q_{max}$).

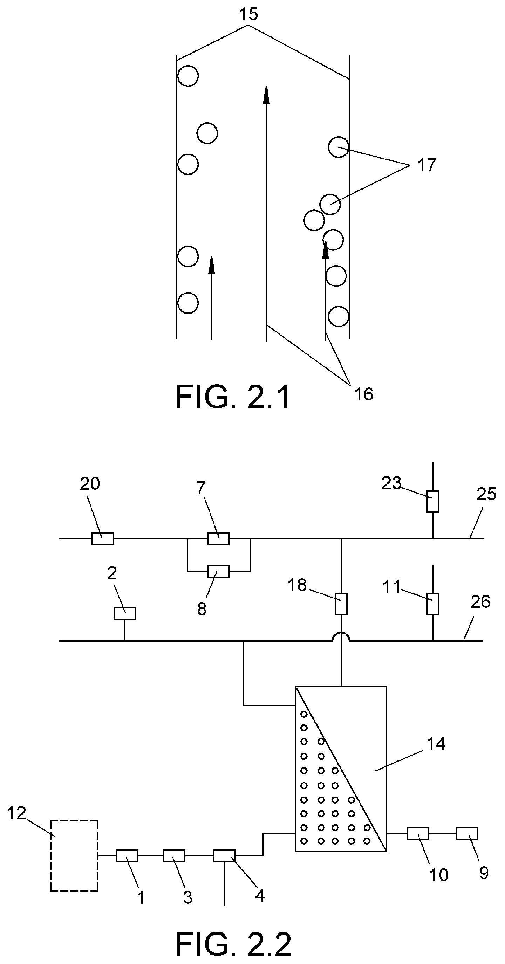

As it may be observed in Figure 2.2, during this cleaning process, the feed pump (1) pumps fluid at $Q_{max}$. An actuated three-way valve (4) has its feed inlet open, as during the filtration stage, thus allowing the fluid to enter the module (14). The fluid flow volume necessary to conduct the scavenging process ($Q_{sc}$) will be defined by the number of modules (14) that are to be washed simultaneously (Y) and the flow (16) during the scavenging process ($F_{sc}$), according to the following equation: $Q_{sc} = F_{sc} \cdot Y \cdot A$, during a period of time $t_{sc}$ (scavenging time).

A scavenger valve (18) is placed at the outlet of the module (14) of the membranes (15), which is connected in series with an actuated drainage valve (7) and a needle valve (8), the last two valves being placed parallel to each other. Finally, a second actuated drainage valve (20) is placed in series.

Upon commencing the scavenging process, the above-mentioned scavenger valve (18) of one of the modules (14) is opened, whereas the same scavenger valve (18) of the rest of the modules (14) remains closed. The actuated drainage valve (7) remains closed, whereas the needle valve (8) is regulated to let the scavenging flow volume pass $Q_s$.

Due to the lower load loss, the feed flow (16) is greater than during the filtration stage, passing tangentially through the inside of the membrane (15) fibres. In this manner, a concentration of solid particles that were being deposited during the filtration stage, called cake, is eliminated. Said solid particle concentration is eliminated by the second actuated drainage valve (20).

Since the intention is to maintain a constant product flow volume, and since for the scavenging of the module/s (14) a greater feed flow volume is required to pass through the module (14), to ensure the product flow volume Qp, an additional flow volume ($V_{sc}$) is necessary, which will be provided by the hydropneumatic accumulator (2), based on the following equation: $V_{sc} = [Q_p - (Q_{max} - Q_{sc})] \cdot t_{sc}$.

In an embodiment of the invention, air is introduced into the system with the aim of creating greater turbulence. With the help of a compressor (9) from a solenoid frame (10) connected in series, air is directly fed at the inlet of the module (14). Air is eliminated through a vent valve (23) should it enter through the drainage line (25) or through a vent valve (11) should the air enter through the product line (26).

Based on the type of fluid, both the scavenging flows ($F_{sc}$) and the scavenging time ($t_{sc}$) vary. Ideally, the following values have been proposed for surface waters, sea waters and residual waters: surface water ($F_{sc}$ = 100 lmh, $t_{sc}$ = 20 sec), sea water ($F_{sc}$ = 120 lmh, $t_{sc}$ = 30 sec), residual water ($F_{sc}$ = 180 lmh, $t_{sc}$ = 50 sec). However, since the parameters to be controlled for each type of fluid differ significantly, the following scavenging ranges are set: $70 \leq F_{sc}$ *(lmh)* $\leq 200$; $10 \leq t_{sc}$ *(sec)* $\leq 60$.

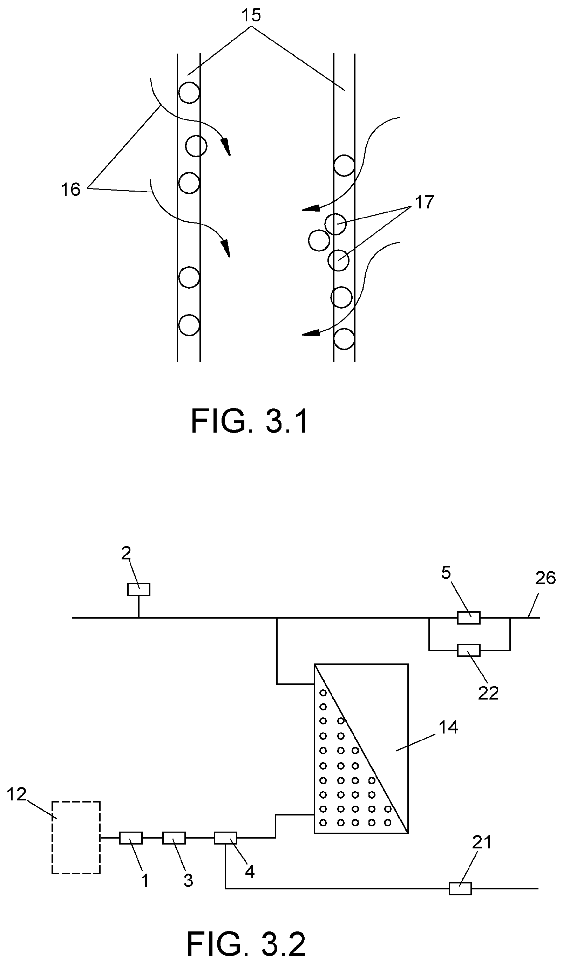

Once the scavenging and elimination of most of the solid particles (17) deposited in the inner surface of the membrane (15) fibres is carried out, the backwash takes place. As during the scavenging, the backwash is carried out module (14) by module (14) or by pairs of modules (14), while the rest of the modules (14) continue filtering. During this cleaning process, the filtration flow (16) is reversed, as it may be observed in Figure 3.1, thus conducting the cleaning with product fluid from the outside to the inside of the membrane (15) fibres, eliminating partially or totally the particles adsorbed in the membrane (15) pores. The product fluid necessary during the backwash will be obtained in two manners:

On the one side, during the washing processes, the feed pump (1) will be pumping at maximum flow volume Qmax, therefore, by maintaining the constant product flow volume, part of the product produced by the rest of the modules (14) will be used to conduct the backwash (BW).

On the other side, the hydropneumatic accumulator (2) will provide the necessary flow volume to supplement the flow volume provided by the pump to conduct the backwash.

As it may be observed in Figure 3.2 in this backwash stage, as during the scavenging stage, a feed pump (1), a prefilter (3) and an actuated three-way valve (4) are connected at the inlet of the module (14). A second needle valve (21) is connected in series through a connection way of the actuated three-way valve (4). A product valve (5) and a third needle valve (22) are connected at the outlet of module (14), the last two valves being parallel to each other. A hydropneumatic accumulator (2) is connected in series with the product valve (5) and the third needle valve (22).

The feed pump (1) pumps fluid at a maximum flow volume $Q_{max}$ and passes through the modules (14) that are not being cleaned, such that it filters a greater flow volume than the product flow volume Qp.

The product valve (5) is closed, maintaining the third needle valve (22) open, which has been previously adjusted to the established fluid passage. In this manner, a back pressure that favours cleaning is created. It is then when the feed inlet to the module (14) is closed in the actuated three-way valve (4), and the second needle valve (21), which is at ambient pressure, is opened.

The fluid passes through the module (14) membranes (15) from the outside to the inside and the modules (14) from top to bottom, thus eliminating the solid particles (17) adsorbed in the fibre pores. As during the scavenging, the backwash flow volume ($Q_{bw}$) which enters the module (14) during the defined backwash time ($t_{bw}$) is determined based on the equation shown hereinafter: $Q_{bw} = F_{bw} \cdot Y \cdot A$, during a period of time $t_{bw}$ (backwash time).

Due to the back pressure created in the product line, this sequence favours the entry of the product fluid in the module (14) coming from both the hydropneumatic accumulator (2) and from part of the product of the rest of the modules (14), to be able to carry out the cleaning while the desired product flow volume is maintained. In this case, the hydropneumatic accumulator (2) will have to provide the following flow volume to complete the backwash flow volume (BW):

$$V_{bw} = [Q_p - (Q_{max} - Q_{bw})] \cdot t_{bw}$$

Based on the type of fluid, both the backwash flows ($F_{bw}$) and the backwash time ($t_{bw}$) vary. Ideally, the following values have been proposed for surface waters, sea waters and residual waters: surface water ($F_{bw}$ = 120 lmh, $t_{bw}$ = 20 sec), sea water ($F_{bw}$ = 220 lmh, $t_{bw}$ = 30 sec), residual water ($F_{bw}$ = 180 lmh, $t_{bw}$ = 30 sec). However, since the parameters to be controlled for each type of fluid differ significantly, the following backwash ranges are set: $90 \leq F_{bw}$ *(lmh)* $\leq 250$; $5 \leq t_{bw}$ *(sec)* $\leq 60$.

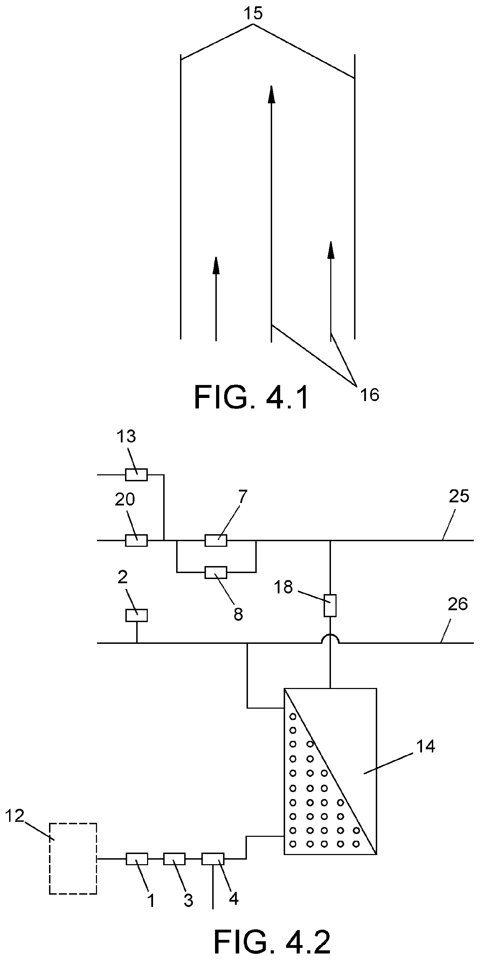

The rinsing is the last of the cleaning methods of the proposed sequence. The process is carried out like that of the scavenging but, on this occasion, since the vast majority of the solid particles (17) have already been eliminated during the scavenging and backwash, the fluid used in these cleaning methods is recirculated to the feed tank (12) or directly to the feed current. The diagram of this rinsing stage (Figure 4.2) is very similar to that of the scavenging stage (Figure 2.2). Said diagram of the rinsing stage is composed by the same elements with the same arrangement as in the scavenging stage, but eliminating the vent valves (11, 23), the solenoid frame (10) and the compressor (9) and adding a recirculation valve (13) connected parallel to the inlet of the second actuated drainage valve (20), which recirculates the fluid to a tank (12) or collector for it to be re-used.

During this cleaning, the feed pump continues pumping a maximum flow volume $Q_{max}$, and as during the scavenging, an actuated three-way valve (4) has the inlet of the feed open, thus requiring the module (14) the following scavenging flow volume for the rinsing: $Q_{sc} = F_{sc} \cdot Y \cdot A$, during a rinsing time $t_{ri}$. Generally, the flow (16) during the rinsing process will be as during the scavenging process, therefore: $Q_{sc} = Q_{ri}$.

However, the duration of the rinsing ($t_{ri}$) tends to be shorter than that of the scavenging ($t_{sc}$). As it may be observed in Figure 4.2, like during the scavenging stage, a scavenging valve (18) is opened while the actuated drainage valve (7) remains closed, while the needle valve (8) is regulated to give way, in this case, to the scavenging flow volume $Q_a$. In this case, the rinsing fluid will not be sent to the drainage; it will be recirculated to the feed current, by means of an actuated recirculation valve (13). Being the fluid directly recirculated to the feed tank (12) or to the feed current.

To continue with a constant product flow volume, Qp, the hydropneumatic accumulator (2) will also provide the fluid volume necessary to complete the rinsing flow volume, according to the following equation:

$$V_{ri} = [Q_p - (Q_{max} - Q_{ri})] \cdot t_a.$$

Based on the type of fluid, both the rinsing flows ($F_{ri}$) and the rinsing time ($t_{ri}$) vary. Ideally, the following values have been proposed for surface waters, sea waters and residual waters: surface water ($F_{ri} = 100$ lmh, $t_{ri} = 10$ sec), sea water ($F_{ri} = 120$ lmh, $t_{ri} = 30$ sec), residual water ($F_{ri} = 180$ lmh, $t_{ri} = 30$ sec). However, since the parameters to be controlled for each type of fluid differ significantly, the following rinsing ranges are set: $70 \leq F_a$ (lmh) $\leq 200; 0 \leq t_a$ (sec) $\leq 40$.

When the previous cleaning methods, such as the filtration, scavenging and rinsing stage, are not sufficient to return to the initial status of the membrane (15), chemical cleaning methods are required.

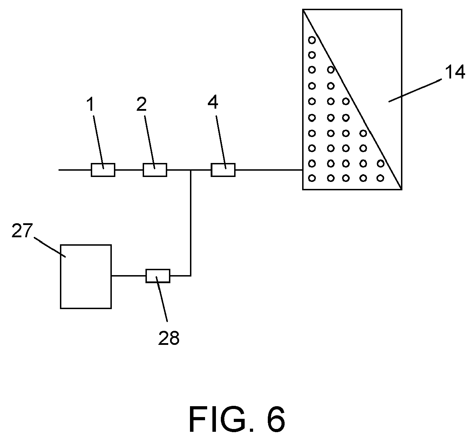

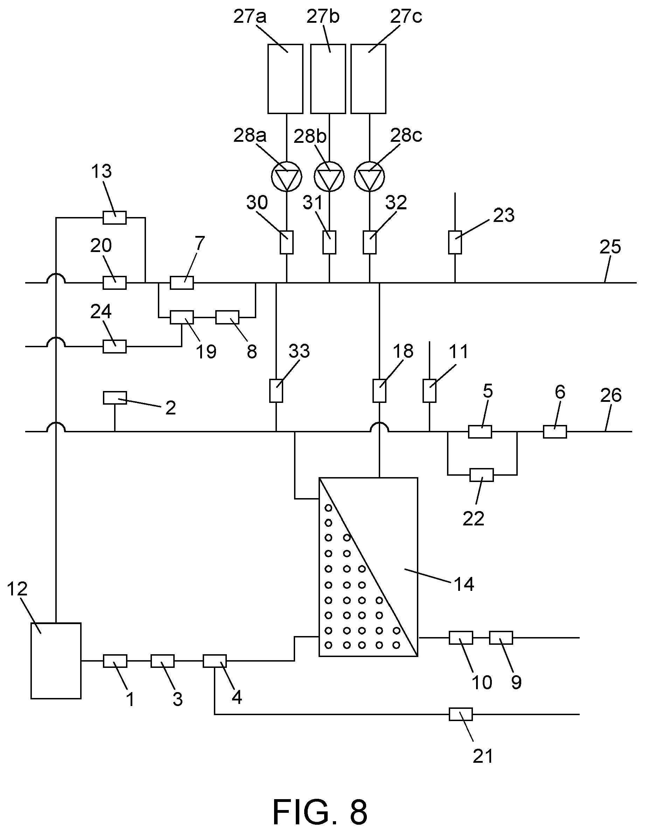

In an embodiment of the invention, a chemical cleaning called CEF (chemically enhanced flushing) is carried out, which consists in a scavenging/rinsing process, but adding to the feed current certain chemicals such as oxidizing agents, acids or alkali, etc. There are two embodiments of the system to conduct the CEF cleaning. Each chemical product has its own dosing system, composed of a chemical product tank (27a, 27b, 27c) and a metering pump (28a, 28b, 28c) and the necessary auxiliary elements. Each of the chemical products is pumped to the feed current. A first embodiment of the elements necessary for conducting the CEF cleaning may be observed in Figure 6, wherein the chemical product tank (27a, 27b, 27c) and the metering pump (28a, 28b, 28c) are connected in series with the inlet of the actuated three-way valve (4), which is connected with the inlet of the module (14). A second arrangement of the elements necessary to conduct the CEF may be observed in Figure 8.

This operation may be carried out, depending on the chemical and its effect on the product current, either continuously or interrupting the entire system, conducting the scavenging/rinsing process, whose product flow volume is sent to drainage line, and thus starting up the system again. With the aim of maximizing the benefits inherent to the process, the idea is to minimise or avoid these kinds of chemical cleaning methods based on the quality of the feed fluid.

To introduce the chemical products in the system, in the second embodiment of the invention developing CEF cleaning methods, three chemical product tanks (27a, 27b, 27c) are used, one for each type of chemical product, which are communicated with the system through a valve (30, 31, 32) for each type of chemical product, and with a metering pump for chemical products (28a, 28b, 28c) related to each chemical product tank (27a, 27b, 27c), thus the cleaning system comprises an acid injection valve (30), a base injection valve (31) and an oxidizing agent injection valve (32), apart from an actuated valve for CEF cleaning methods (33) which is placed connecting the drainage line (25) with the product line (26).

As to the first embodiment, the position of the valves (30, 31, 32) in the cleaning system is modified, that is, the location of the injection of the chemical products used in the CEF (chemically enhanced flushing) is modified, such that the chemical products are introduced in a drainage line (25).

It is the object of the invention to provide a procedure to conduct CEF cleaning methods of a module (14), which comprises closing the actuated recirculation valve (13), opening a way of the actuated three-way valve (4) of the module (14) connected with the second needle valve (21), opening the second needle valve (21), opening the scavenger valve (18) of the module (14), opening the valve for CEF cleaning methods (33), and injecting at least one chemical product in the drainage line (25) by opening the related valve for chemical products (30, 31, 32), and eliminating the water with at least one chemical product, through one way of the actuated three-way valve (4) connected with the second needle valve (21) and through the above-mentioned second needle valve (21).

With this sequence of valves and water movement, part of the water of the product line (26) is introduced in the drainage line (25) where it is mixed with the chemical products introduced and passed through the module (14).

Once the water is in the module (14), there are two options:

- retaining water inside the module (14) for some time, or
- eliminating the water directly by opening the actuated three-way valve (4) associated to this module (14) and the second needle valve (21).

To retain the water inside the module (14), the following valves are closed:

- the scavenger valve (18) and the actuated three-way valve (4) associated to this module (14), and
- the actuated product valve (5), the actuated recirculated valve (13), the second actuated drainage valves (20) and the actuated valve for CEF cleaning methods (33).

In another embodiment of the invention, the cleaning called CIP (cleaning in place) is carried out, which is conducted periodically based on the quality of the feed fluid. One of the objectives of the cleaning regime is eliminating the CEF cleaning methods carried out according to the first embodiment, with the proposed scavenging, backwash and rinsing sequence and increasing the frequency of the CIP cleaning methods. However, the CEF cleaning method carried out with the second embodiment does not require CIP as often as with the first embodiment of CEF cleaning methods. This CIP cleaning requires the use of the elements previously described for each scavenging, backwash and rinsing stage.

The cleaning solution is prepared in the feed tank (12) which is previously filled with product fluid and is pumped to the process using the feed pump (1) itself. Afterwards, the fluid enters through the feed current and the solution may be retained in the modules (14) (soaking) or be constantly recirculated, or a combination thereof.

Should the solution be retained in the modules (14), the scavenger valves (18), and the manual product valve (6) need to be closed, or the scavenger valves (18) need to be opened and the actuated recirculation valves (13), the manual product valve (6) and the second actuated drainage valves (20) need to be closed to prevent the solution from exiting the system. Once the solution is filling the system, the feed pump (1) is stopped.

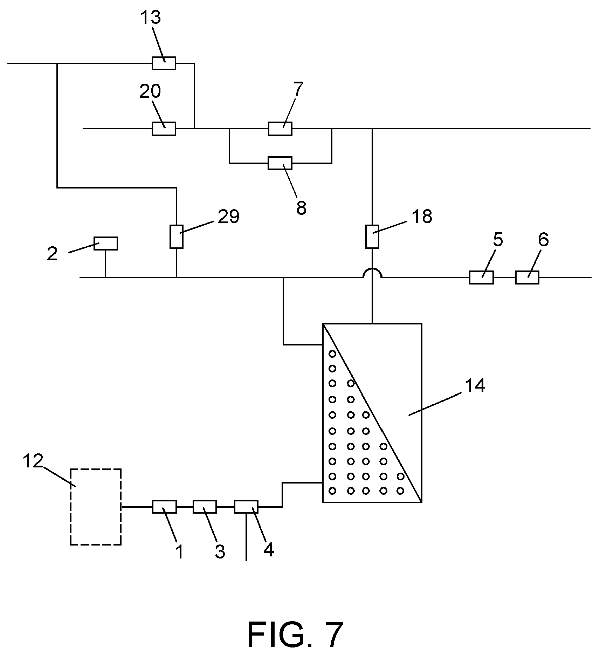

In the event the solution is recirculated as it may be observed in Figure 7, the feed pump (1) continuously feeds the system and the actuated recirculation valves (13), the scavenger valves (18) and several manual washing by-pass valves (29) are opened, while the manual product valve (6) remains closed. It is important to take into account that in the previously described processes in which the cleaning solution is used, in the embodiment wherein a CIP cleaning is carried out, and in the first embodiment wherein the CEF cleaning is carried out, the system needs to be stopped and, therefore, no product is obtained. However, in the second embodiment wherein a CEF cleaning is carried out, the product is indeed obtained.

In another embodiment, the system comprises a chemical cleaning stage during the filtration stage wherein the chemical solution is added to the common feed current of the modules (14) and is retained in at least one module (14). For said purpose, in a single module (14) (or a pair of modules (14) depending on the configuration), the actuated three-way valve (4) is closed both at the feed inlet and at the drainage outlet, while the fluid continues to circulate through the rest of the modules (14). To displace the chemical solution of the module (14) where it was retained, the actuated three-way valve (4) is opened towards the feed current and the scavenger valve (18) and the second actuated drainage valve (20) are opened. This operation is also performed with each module (14) until all of them have been washed individually. An advantage of this embodiment is that, in this case, while the cleaning of the modules is carried out, it is possible to obtain a product fluid.

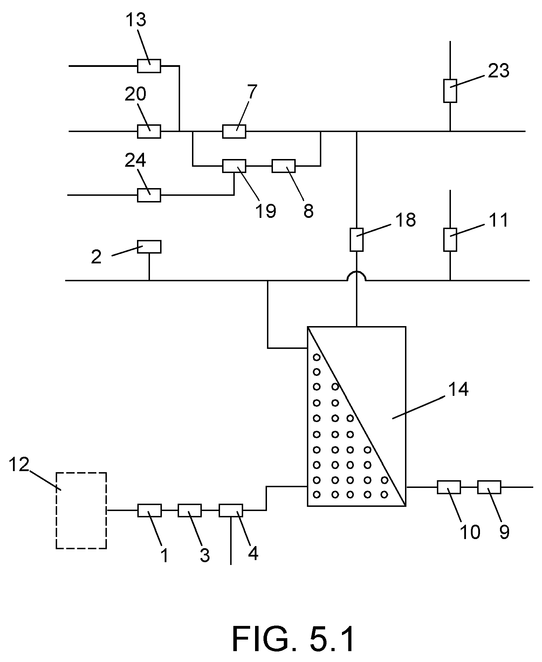

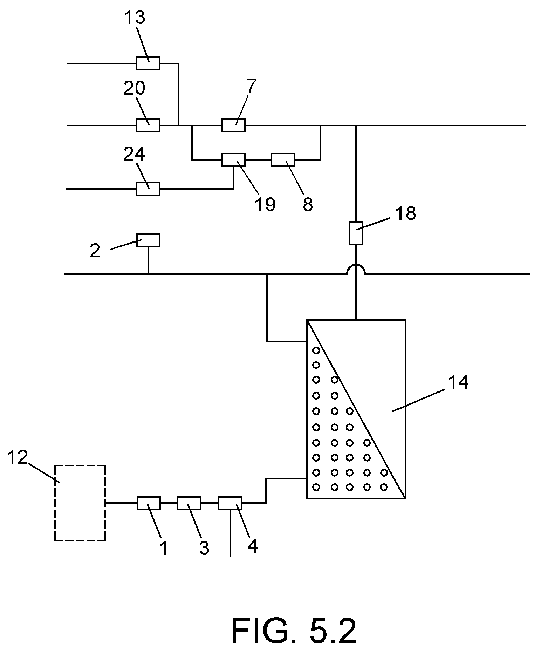

In another embodiment of the invention of the scavenging stage and in another embodiment of the invention of the rinsing stage, the fluid exiting once these cleaning stages have been completed is re-used thanks to the use of a centrifugal separator (19) instead of being discharged by means of a drainage line, as it may be observed in Figures 5.1 and 5.2.

Said embodiment of the scavenging stage may be observed in Figure 5.1, wherein the elements composing the system are the same as in the mentioned scavenging stage, adding a centrifugal separator (19) in series with the needle valve (8) and both being parallel to the actuated drainage valve (7), and a third actuated drainage valve (24) in series with said centrifugal separator (19). In addition, the actuated recirculation valve (13) is connected parallel to the inlet of the second actuated drainage valve (20). The function of the needle valve (8) is to increase the load loss to adjust the scavenging flow volume. Except in the chemical cleaning (CIP), the water will be forced to pass through the centrifugal separator (19), which introduces a load loss to generate a centrifugal flow that allows for separating larger solid particles from the rest of the water current. In this embodiment, the centrifugal fluid is poured to the drainage line (26) by means of the second actuated drainage valve (20) or by being recirculated to tank (12) or collector by means of an actuated recirculation valve (13), while the residues are discharged through the third actuated drainage valve (24).

In Figure 5.2 an embodiment of the rinsing stage may be observed, wherein the elements composing the system are the same as in the above-mentioned rinsing stage, adding a centrifugal separator (19) in series with the needle valve (8), which has the function of increasing the load loss to adjust the rinsing flow volume, both being parallel to an actuated drainage valve (7), and a third actuated drainage valve (24) in series with said centrifugal separator (19). As in the previous embodiment, except in the chemical cleaning (CIP), the water will be forced to pass through the centrifugal separator (19), which introduces a load loss to generate a centrifugal flow that allows for separating larger solid particles from the rest of the water current. In this embodiment, as in the previous embodiment, the centrifugal fluid is poured to the drainage line (26) by means of the second actuated drainage valve (20) or by being recirculated to a tank or collector by means of the actuated recirculation valve (13), while the residues are discharged through the third actuated drainage valve (24).

In addition, depending on the stage of the process, filtration or cleaning methods, the feed pump (1) has different angles of operation. During the cleaning processes, it is constantly pumping fluid at maximum flow volume $Q_{max}$ and, during the filtration stage, it is pumping product flow volume Qp almost all the time. However, the hydropneumatic accumulator (2) is filled during the filtration, thus during the filling time of the hydropneumatic accumulator ($t_{HA}$) in the filtration stage, it will also be pumping at $Q_{max}$. The maximum flow volume is thus defined based on the following

parameters: $\dfrac{Q_{max}}{Q_{min}} = \dfrac{f_{max}}{f_{min}}$ wherein $Q_{min} = Q_p$, $f_{max} = 50$ Hz, and $35$ Hz $\leq f_{min} \leq 50$ Hz.

The hydropneumatic accumulator (HA) (2) is in charge of providing part of the product fluid flow volume Qp needed during the cleaning processes. While the $Q_{max}$ is pumped during the filtration stage, part of the product fluid enters into the hydropneumatic accumulator (2) and is stored therein, separating air-tightly several air and fluid chambers. As the hydropneumatic accumulator (2) is filled with fluid, the initial volume of the air captive in the hydropneumatic accumulator (2) decreases, thus leading to a pressure increase. Once it is completely full, the feed pump (1) resumes to pumping flow volume Qp until the cleaning method sequence begins. Thus, the volume of the hydropneumatic accumulator (2) is such that it allows for the completion of a cycle of each cleaning and the filling time thereof, which are determined according to the following equations: $V_{HA} = V_s + V_{bw} + V_a$ ,and $t_{filling,\ HA} = \dfrac{V_{HA}}{(Q_{max} - Q_p)}$

In an embodiment of the invention, depending on the treatment system, it is necessary to include a feed tank (12) to conduct the process. Therefore, if so required, the following considerations are made to ensure that the feed fluid is available at all times: $V_{tank} = \dfrac{Q_{max}}{t_{ret}}$ being $t_{ret} = 5$ -10 minutes.

The fact that the following equation is not complied with $(Q_{max}- Q_s) < Qp$ is descriptive, but not restrictive, of one of the following situations or combinations thereof: more flow volume than desired is produced, providing a surplus of treated fluid; a feed fluid flow volume greater than necessary is pumped, as a result of which we may be using a feed pump that is oversized for the product demand established; or it may not be necessary for the hydropneumatic accumulator (2) to be providing fluid to the process, since the total of product fluid is provided by the fluid product from the rest of the modules.

In other embodiments of the invention, the actuated drainage valves (7, 20 and 24), be it in a pneumatic or electric way, may be replaced by non-return valves, maintaining the same sequence and type of cleaning methods proposed; although in this case the scavenging process, is common for all the framework. Cleaning methods may be conducted individually or in group, based on the quality of the feed fluid and on the requirements of the plant. A centrifugal separation system may be used in the scavenging outlet way with the aim of creating a back pressure and to recover the scavenging pour (once centrifuged) to the head-end of the system (sucking of the feed pump or head-end deposit). The order of each cleaning method with respect to the proposed sequence may be modified.

The filtration system produces product water continuously and maintains the design flow volume based on the cleaning methods and parameters previously specified. Any additional flow volume required to conduct the cleaning methods may be provided by the feed pump (1). Any additional flow volume required to conduct the cleaning methods, may be provided by the hydropneumatic accumulator (2).

The present invention is not limited by the embodiments disclosed herein. Other embodiments can be made by experts in the art following the present description. In consequence, the scope of the invention is defined by the following claims.

**Claims**

1. A cleaning system in filtration processes comprising at least one feed pump (1), at least one hydropneumatic accumulator (2), at least one prefilter (3), at least one actuated three-way valve (4), at least one ultrafiltration module (14), at least one actuated product valve (5), at least one manual product valve (6), at least one scavenger valve (18), at least actuated drainage valves (7, 20, 24), at least needle valves (8, 21, 22), at least one compressor (9), at least one solenoid frame (10), at least vent valves (11, 23), at least one feed tank (12), and at least one actuated recirculation valve (13) **characterised in that**:

- the feed pump (1) is connected in series with at least one prefilter (3), and with at least one actuated three-way valve (4) at the inlet of the module (14),
- at least one hydropneumatic accumulator (2) and at least one actuated product valve (5) and at least one manual product valve (6) are connected in series with the outlet of the module (14),

such that the feed pump (1) and the hydropneumatic accumulator (2) provide the flow volume required to perform the cleaning methods.

2. A cleaning system in filtration processes according to claim 1 **characterised in that**:

- the scavenger valve (18) is connected with the outlet of at least one module (14) and joined to a drainage line (25) wherein the vent valve (23), the actuated drainage valve (7) and the needle valve (8) are connected in series, the last two valves being placed parallel to each other; and a second actuated drainage valve (20),
- the vent valve (11) is connected in series with the hydropneumatic accumulator (2) in a product line (26),
- the compressor (9) and the solenoid frame (10) are connected in series with an inlet of the module (14).

3. A cleaning system in filtration processes according to claim 1 **characterised in that**:

- the second needle valve (21) is connected in series with the actuated three-way valve (4) by means of one connection way of said actuated three-way valve (4),
- the product valve (5) and the third needle valve (22) are connected parallel to each other, said valves being connected in series with the hydropneumatic accumulator (2) at the outlet of the module (14) in a product line (26).

4. A cleaning system in filtration processes according to claim 1 **characterised in that**:

- the scavenger valve (18) is connected with the outlet of the module (14) and joined to the drainage line (25) wherein the actuated drainage valve (7) and the needle valve (8) are connected in series, these last two valves being placed parallel to each other; and a second actuated drainage valve (20),
- the recirculation valve (13) is connected parallel to the inlet of the second actuated drainage valve (20).

5. A cleaning system in filtration processes according to claim 2 **characterised in that**:

- the centrifugal separator (19) is connected in series with the needle valve (8), and both are connected parallel to the actuated drainage valve (7), and the third actuated drainage valve (24) is connected in series with said centrifugal separator (19),
- the actuated recirculation valve (13) is connected parallel to the inlet of the second actuated drainage valve (20).

6. A cleaning system in filtration processes according to claim 4 **characterised in that**:

- the centrifugal separator (19) is connected in series with the needle valve (8), and both are connected parallel to the actuated drainage valve (7), and the third actuated drainage valve (24) is connected in series with said centrifugal separator (19),
- the actuated recirculation valve (13) is connected parallel to the inlet of the second actuated drainage valve (20).

7. A cleaning system in filtration processes according to any of the preceding claims **characterised in that** it comprises at least one chemical product tank (27a, 27b, 27c) and at least one chemical product metering pump (28a, 28b, 28c) which provide at least one chemical product for a chemical cleaning of the cleaning system, the at least one chemical product tank (27a, 27b, 27c) being connected with a drainage line (25).

8. A cleaning system in filtration processes according to claim 7 **characterised in that** it comprises an actuated valve for CEF cleaning methods (33) which joins the product line (26) with the drainage line (25).

**9.** A cleaning system in filtration processes according to claims 7 to 8 **characterised in that** it comprises an acid injection valve (30), a base injection valve (31), and an oxidizing agent injection valve (32), wherein each valve (30, 31, 32) is connected with a chemical product tank (27a, 27b, 27c) and a chemical product metering pump (28a, 28b, 28c) and wherein each valve (30, 31, 32) controls the injection of a chemical product type in the drainage line (25) of the system.

**10.** A cleaning system in filtration processes according to any of the preceding claims **characterised in that** the ultrafiltration module (14) is of the inside-out mode.

**11.** A cleaning system in filtration processes according to any of claims 1 to 9 **characterised in that** the ultrafiltration module (14) is of the outside-in mode.

**12.** A cleaning method in filtration processes which uses the system described in any of claims 1 to 11 **characterised in that** it comprises:

- a first scavenging stage wherein the feed pump (1) pumps fluid to at least the actuated three-way valve (4) at the inlet of the module (14), and at the outlet of the module (14) at least one scavenger valve (18) is opened, the needle valve (8) is regulated to let the fluid pass maintaining the actuated drainage valve (7) closed, the fluid abandoning the system through at least one second actuated drainage valve (20),

- a second backwash stage wherein the feed pump (1) pumps fluid to the inlet of the module (14), and at the outlet of the module (14) at least one product valve (5) is closed, maintaining the third needle valve (22) open, wherein at least one three-way valve (4) closes the feed inlet to the module (14) and opens the outlet towards the second needle valve (21), which is regulated to adjust the passage flow volume,

- a third rinsing stage wherein the feed pump (1) pumps fluid to at least one actuated three-way valve (4) at the inlet of the module (14), and at the outlet of the module (14) at least one actuated scavenger valve (18) (being the scavenger valves (18) of the rest of the modules (14) closed) and at least one actuated recirculation valve (13) is opened and the needle valve (8) is regulated to let the fluid pass, maintaining the actuated drainage valve (7) closed, the fluid recirculating to the feed current through the actuated recirculation valve (13).

**13.** A cleaning method in filtration processes according to claim 12 **characterised in that** in the first scavenging stage air is introduced into the system through a compressor (9) from the solenoid frame (10), the air being discharged through at least one vent valve (11, 23).

**14.** A cleaning method in filtration processes according to claims 12 and 13 **characterised in that** in the first scavenging stage the fluid passes through the centrifugal separator (19), the centrifuged fluid is poured to the drainage line through the second actuated drainage (20), whereas the residues are discharged through the third actuated drainage valve (24).

**15.** A cleaning method in filtration processes according to claim 14 **characterised in that** the centrifuged fluid is recirculated to a tank (12) through the actuated recirculation valve (13).

**16.** A cleaning method in filtration processes according to claim 14 **characterised in that** the centrifuged fluid is recirculated to the feed current through the actuated recirculation valve (13).

**17.** A cleaning method in filtration processes according to claims 12 **characterised in that** in the third rinsing stage the fluid passes through the centrifugal separator (19), the centrifuged fluid is poured to the drainage line through the second actuated drainage valve (20), whereas the residues are discharged through the third actuated drainage valve (24).

**18.** A cleaning method in filtration processes according to claim 17 **characterised in that** the centrifuged fluid is recirculated to a tank (12) through the actuated recirculation valve (13).

**19.** A cleaning method in filtration processes according to claim 17 **characterised in that** the centrifuged fluid is recirculated to the feed current through the actuated recirculation valve (13).

**20.** A cleaning method in filtration processes according to any of claims 12 to 13 **characterised in that** it comprises a stage wherein a chemical solution is retained in at least one module (14) where the scavenger valve (18) and the manual product valve (6) are closed, the feed of the pump (1) being stopped when the cleaning solution is in the system.

**21.** A cleaning method in filtration processes according to any of claims 12 to 13 **characterised in that** it comprises a stage where a chemical solution is retained in at least one module (14) where the scavenger valve (18) is opened and the manual product valve (6), the actuated recirculation valve (13) and the second drainage valve (20) are closed, the feed of the pump (1) being interrupted when the cleaning solution is in the system.

**22.** A cleaning method in filtration processes according to any of claims 12 to 13 **characterised in that** it comprises a stage where the chemical solution is constantly recirculated where the actuated recirculation valve (13), the scavenger valve (18) and a washing by-pass manual valve (29) are opened, and the manual product valve (6) is closed, the pump (1) thus continuing to feed the system.

**23.** A cleaning method in filtration processes according to any of claims 12 to 13, **characterised in that** it comprises a chemical cleaning in each module (14) which comprises the following steps:

- closing the actuated recirculation valve (13),
- opening a way of the actuated three-way valve (4) of the module (14) which connects with the second needle valve (21),
- opening the second needle valve (21),
- opening the scavenger valve (18) of the module (14),
- opening the valve for CEF cleaning methods (33),
- injecting at least one chemical product in the drainage line (25) opening the corresponding valve for chemical products (30, 31, 32),
- removing the water with at least one chemical product, through the way of the actuated three-way valve (4) which connects with the second needle valve (21) and through the above-mentioned second needle valve (21).

**24.** A chemical cleaning method in filtration processes according to claim 23 **characterised in that** it retains the water inside the module (14) for some time prior to eliminating the water with at least one chemical product.

**25.** A CEF chemical cleaning method in filtration processes according to claim 24 **characterised in that**, in order to retain water, the following valves are closed:

- the scavenger valve (18), the actuated three-way valve (4) and the actuated product valve (5) associated to this module (14),
- the actuated recirculation valve (13), the second actuated drainage valves (20) and the actuated valve for CEF cleaning methods (33).

**26.** A cleaning method in filtration processes according to claims 20 to 22 **characterised in that** it comprises a stage comprising the combination of the stages described in claims 20 to 22.

**27.** A cleaning method in filtration processes according to any of claims 12 to 19 **characterised in that** the order of the stages described in claims 12 to 19 may be changed.

**28.** A cleaning method in filtration processes according to any of claims 12 to 19 **characterised in that** the stages described in claims 12 to 19 are performed simultaneously.

**29.** A cleaning method in filtration processes according to any of claims 12 to 19 **characterised in that** it comprises a stage where a chemical solution is retained in at least one module (14), wherein the actuated three-way valve (4) is closed at the feed inlet and the drainage outlet of at least one module (14), while the fluid circulates through the rest of the system.

**30.** A cleaning method in filtration processes according to claim 26 **characterised in that** the scavenger valve (18), the feed of the actuated three-way valve (4) and the second actuated drainage valve (20) are opened, thus displacing the chemical solution of the module (14) where it was retained.

FIG. 1

FIG. 2.1

FIG. 2.2

FIG. 3.1

FIG. 3.2

15

16

# FIG. 4.1

13

20

7

25

8

2

18

26

14

12

1

3

4

# FIG. 4.2

FIG. 5.1

FIG. 5.2

FIG. 6

FIG. 7

FIG. 8

# INTERNATIONAL SEARCH REPORT

| International application No. |
| --- |
| PCT/ES2014/070735 |

## A. CLASSIFICATION OF SUBJECT MATTER

See extra sheet

According to International Patent Classification (IPC) or to both national classification and IPC

## B. FIELDS SEARCHED

Minimum documentation searched (classification system followed by classification symbols)
B01D, B04B, C02F

Documentation searched other than minimum documentation to the extent that such documents are included in the fields searched

Electronic data base consulted during the international search (name of data base and, where practicable, search terms used)

EPODOC, INVENES

## C. DOCUMENTS CONSIDERED TO BE RELEVANT

| Category* | Citation of document, with indication, where appropriate, of the relevant passages | Relevant to claim No. |
| --- | --- | --- |
| A | CN 202164182U U (CHANG HUA WATER REFINER CO LTD) 14/03/2012, Abstract from DataBase EPODOC. Retrieved from EPOQUE | 1-30 |
| A | CN 202778139U U (WENZHOU JIAN BAND PHARMACY MACHINE MANUFACTURE CO LTD) 13/03/2013, Abstract from DataBase EPODOC. Retrieved from EPOQUE | 1-30 |
| A | CN 201776086U U (SHANGHAI OZNERENVIRONMENTAL PROT TECHNOLOGY CO LTD) 30/03/2011, Abstract from DataBase EPODOC. Retrieved from EPOQUE | 1-30 |
| A | US 2003178350 A1 (HARRIS JAMES JEFFREY ET AL.) 25/09/2003, pages 2 - 20; | 1-30 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
| --- | --- |
| 20/10/2014 | (21/10/2014) |

| Name and mailing address of the ISA/ | Authorized officer |
| --- | --- |
| OFICINA ESPAÑOLA DE PATENTES Y MARCAS Paseo de la Castellana, 75 - 28071 Madrid (España) Facsimile No.: 91 349 53 04 | C. Galdeano Villegas Telephone No. 91 3493099 |

Form PCT/ISA/210 (second sheet) (July 2009)

## INTERNATIONAL SEARCH REPORT

Information on patent family members

| International application No. |
| --- |
| PCT/ES2014/070735 |

| Patent document cited in the search report | Publication date | Patent family member(s) | Publication date |
| --- | --- | --- | --- |
| CN202164182U U | 14.03.2012 | NONE | |
| CN202778139U U | 13.03.2013 | NONE | |
| US2003178350 A1 | 25.09.2003 | US6752920 B2 | 22.06.2004 |
| CN201776086U U | 30.03.2011 | NONE | |

Form PCT/ISA/210 (patent family annex) (July 2009)

**INTERNATIONAL SEARCH REPORT**

International application No.

PCT/ES2014/070735

CLASSIFICATION OF SUBJECT MATTER

**B01D35/22** (2006.01)
B01D61/18 (2006.01)
B04B1/00 (2006.01)
B01D29/33 (2006.01)
C02F9/02 (2006.01)

Form PCT/ISA/210 (extra sheet) (July 2009)